# EUROPEAN PATENT APPLICATION

(11) **EP 1 586 989 A2**
(43) Date of publication of application: **19.10.2005**
(21) Application number: 05006220.7
(22) Date of filing: 22.03.2005
(51) Int. Cl.: G06F 3/12

(54) **Automatic customization of printer drivers**

(30) Priority: 12.04.2004 US 823064
(71) Applicant: Ricoh Company, Ltd., Tokyo 143-8555 (JP)
(72) Inventor: Nuggehalli, Jayasimha, Cupertino CA 95014-5924 (US); Wang, Sam Y., Cupertino CA 95014-5924 (US)
(74) Representative: Schwabe - Sandmair - Marx

(57) **Abstract**

An approach for automatically customizing printer drivers generally includes installing a generic printer driver on a client. The client is configured to allow communications between the generic printer driver and a printing device. The generic printer driver automatically retrieves configuration data from the printing device and stores the configuration data on a non-volatile storage. The configuration data indicates one or more attributes of the printing device and allows data to be printed to the printing device via the generic printer driver. The approach allows a generic printer driver to be used with many different printing devices, thereby reducing development costs and installation overhead.

## Description

### FIELD OF THE INVENTION

This invention relates generally to networking and printing, and more specifically, to an approach for automatically customizing printer drivers.

### BACKGROUND

The approaches described in this section are approaches that could be pursued, but not necessarily approaches that have been previously conceived or pursued. Therefore, unless otherwise indicated, the approaches described in this section may not be prior art to the claims in this application and are not admitted to be prior art by inclusion in this section.

A printer driver is a computer software program that allows an application program to print on a printing device. Printer drivers act like translators between application programs and printing devices. Printer drivers accept generic commands from application programs and translate them into specialized commands that are supported by printing devices. As a result, computer systems generally require a separate driver for each printing device to be used by the computer systems.

New computers often are provided with a set of printer drivers for popular printing devices. For example, a set of printer drivers is included on a hard disk. When a new printing device is to be used, the printer driver for the device is selected and installed, typically by the operating system. In so-called "plug & play" environments, the operating system detects the availability of a new printing device and automatically locates and installs an appropriate driver. In situations where a compatible driver cannot be located, then a user is queried for a driver, which may be provided on a removable storage device, such as a floppy disk or CD ROM. Users may alternatively locate a compatible driver over the Internet, for example, from a manufacturer's Website.

Manufacturers usually develop a new printer driver for each new printing device, even if the printing device is only a newer version of an existing printing device. Developing and maintaining separate printer drivers for each printing device is very expensive, especially for manufacturers that manufacture a large number of printing devices. Furthermore, the correct printer driver must be distributed with each printing device and made available to consumers. Consumers who install new printing devices sometimes do not have a compatible printer driver available on their computer system. These consumers must install a printer driver provided with the new printing device or obtain a compatible printer driver from the manufacturer, typically over the Internet.

Based on the foregoing, there is a need for an approach for managing printer drivers that does not suffer from limitations of prior approaches. There is a particular need for an approach for providing the functionality of printer drivers without the inconvenience of developing and maintaining a separate printer driver for each printing device.

### SUMMARY

An approach for automatically customizing printer drivers generally includes installing a generic printer driver on a client. The client is configured to allow communications between the generic printer driver and a printing device. The generic printer driver automatically retrieves configuration data from the printing device and stores the configuration data on a non-volatile storage. The configuration data indicates one or more attributes of the printing device and allows data to be printed to the printing device via the generic printer driver. The approach allows a generic printer driver to be used with many different printing devices, thereby reducing development costs and installation overhead.

According to one aspect of the invention, an apparatus comprises a non-volatile storage device, an application program and a printer driver. The printer driver is configured to retrieve configuration data from a printing device and cause the configuration data to be stored on the non-volatile storage device.

### BRIEF DESCRIPTION OF THE DRAWINGS

The present invention is illustrated by way of example, and not by way of limitation, in the figures of the accompanying drawings and in which like reference numerals refer to similar elements and in which:
FIG. 1 is a block diagram that depicts an arrangement for automatically customizing printer drivers according to one embodiment of the invention.
FIG. 2 is a flow diagram that depicts an approach for automatically customizing a printer driver according to an embodiment of the invention.
FIG. 3 is a block diagram that depicts example printing device configuration data according to one embodiment of the invention.
FIG. 4 is a block diagram that depicts an arrangement for configuring a printer driver to support multiple printing devices.
FIG. 5 is a block diagram of a computer system on which embodiments of the invention may be implemented.

### DETAILED DESCRIPTION

In the following description, for the purposes of explanation, numerous specific details are set forth in order to provide a thorough understanding of the present invention. It will be apparent, however, to one skilled in the art that the present invention may be practiced without these specific details. In other instances, well-known structures and devices are shown in block diagram form in order to avoid unnecessarily obscuring the present invention. Various aspects of the invention are described hereinafter in the following sections:
I. OVERVIEW
II. ARCHITECTURE
III. AUTOMATICALLY DOWNLOADING PRINTING DEVICE CONFIGURATION DATA
IV. USING DOWNLOADED CONFIGURATION DATA TO CUSTOMIZE A PRINTER DRIVER
V. UPDATING CONFIGURATION DATA
VI. MULTIPLE PRINTING DEVICE APPLICATIONS
VII. IMPLEMENTATION MECHANISMS

### I. OVERVIEW

An approach for automatically customizing printer drivers generally includes installing a generic printer driver on a client. The client is configured to allow communications between the generic printer driver and a printing device. The generic printer driver automatically retrieves configuration data from the printing device and stores the configuration data on a non-volatile storage. The configuration data indicates one or more attributes of the printing device and allows data to be printed to the printing device via the generic printer driver. The approach allows a generic printer driver to be used with many different printing devices, thereby reducing development costs and installation overhead.

### II. ARCHITECTURE

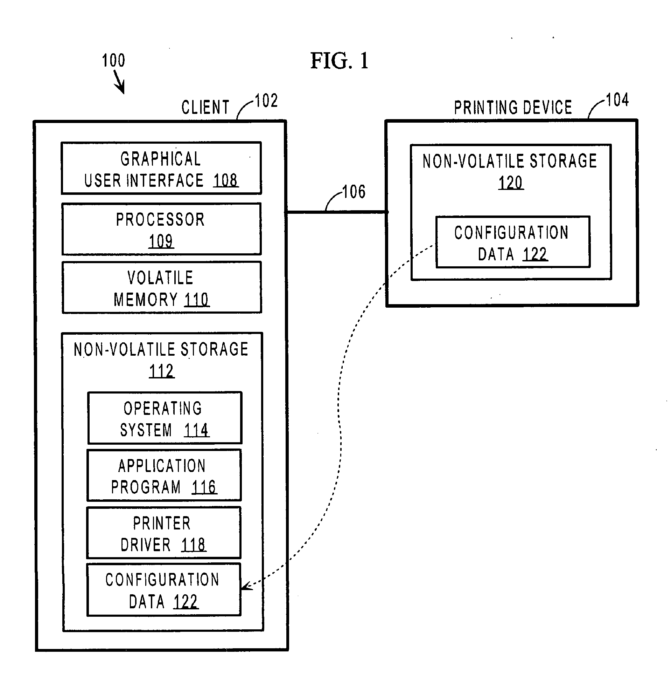

FIG. 1 is a block diagram that depicts an arrangement 100 for automatically customizing printer drivers according to one embodiment of the invention. Arrangement 100 includes a client 102 coupled to a printing device 104 via a link 106. Client 102 may be any type of client, depending upon the requirements of a particular application, and the invention is not limited to any particular type of client. Example clients include, without limitation, computers, workstations, personal digital assistants (PDAs), mobile devices and any other type of wired or wireless devices. Printing device 104 any type of device configured to perform printing functions, depending upon the requirements of a particular application, and the invention is not limited to any particular type of printing device. Example printing devices include, without limitation, printers, copiers, facsimile machines, mobile devices and multi-function peripherals. Link 106 may be implemented by any medium or mechanism that provides for the exchange of data between client 102 and printing device 104. Examples of link 106 include, without limitation, a network such as a Local Area Network (LAN), Wide Area Network (WAN), Ethernet or the Internet, or one or more terrestrial, satellite or wireless links. Client 102 and printing device 104 may include other elements, depending upon the requirements of a particular implementation that are not depicted in the figures and described herein for purposes of explanation.

According to one embodiment of the invention, client 102 is configured with a graphical user interface 108, such as a cathode ray tube (CRT), liquid crystal display (LCD) or other mechanism, a processor 109, a volatile memory 110, such as a RAM, and a non-volatile storage 112, such as one or more disks. Non-volatile storage 112 includes an operating system 114, an application program 116 and a printer driver 118. Embodiments of the invention are described herein in the context of a single operating system 114, a single application program 116 and a single printer driver 118, for purposes of explanation only and the invention is not limited to only one of each of these elements and any number of these elements may be used, depending upon the requirements of a particular implementation. Embodiments of the invention are also applicable to multiple processors and multiple memories.

Printing device 104 includes a non-volatile storage 120, such as one or more disks. Non-volatile storage 120 includes configuration data 122 that indicates or specifies one or more attributes of printing device 104. For example, configuration data 122 may indicate one or more installed options or features of printing device 104, such as the types and number of installed source trays, the types of media supported and available finishing options such as stapling, folding and binding. Configuration data 122 may be stored on non-volatile storage 120 in any type of data files. Alternatively, configuration data 122 may be stored in firmware. Configuration data 122 is described in more detail hereinafter.

### III. AUTOMATICALLY DOWNLOADING PRINTING DEVICE CONFIGURATION DATA

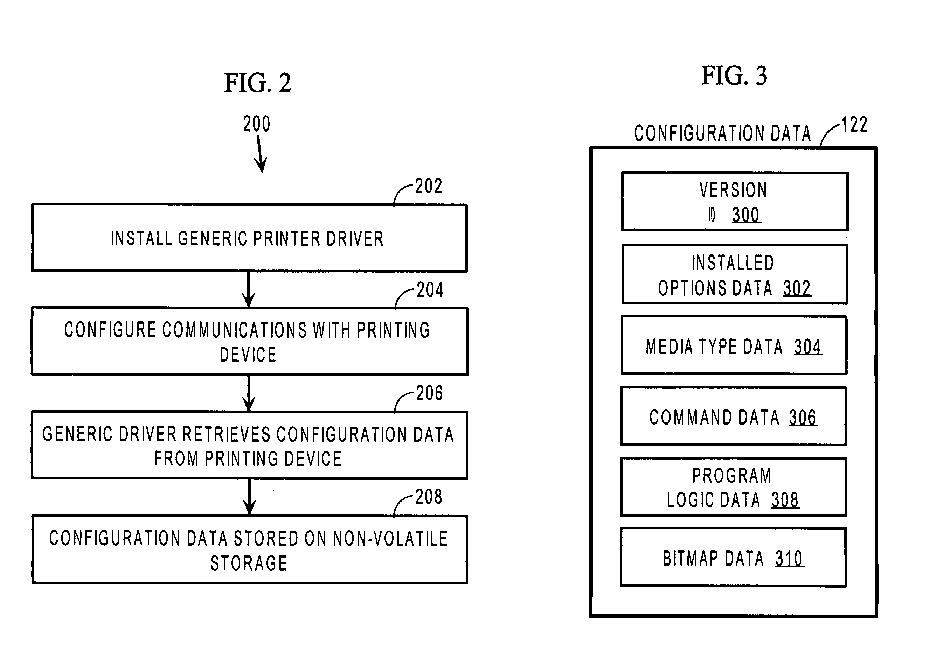

FIG. 2 is a flow diagram 200 that depicts an approach for automatically customizing a printer driver according to an embodiment of the invention. In step 202, a generic printer driver is installed on a client. For example, printer driver 118 is installed on client 102. In the present example, the printer driver 118 includes basic functionality of some printing devices, but not necessarily all of the functionality required by printing device 104.

In step 204, communications are established between printer driver 118 and printing device 104. This may include, for example, configuring a TCP/IP session or a local port on client 102 to allow printer driver 118 to communicate with printing device 104. For example, the process of installing printer driver 118 may include specifying a particular communications port to be used by printer driver 118 to communicate with printing device 104.

In step 206, the generic printer driver retrieves configuration data from the printing device. In the present example, printer driver 118 retrieves configuration data 122 from printing device 104 over link 106. Printer driver 118 may generate and send a request to printing device 104 to obtain configuration data 122. Printing device 104 processes the request and provides the configuration data 122 to printer driver 118. Configuring printing device 104 to process requests for configuration data 122 may be performed in a variety of ways, depending upon the requirements of a particular application, and the invention is not limited to any particular approach. For example, printing device 104 may include firmware that is configured to process requests for configuration data 122. As another example, printing device 104 may be configured with a server process that processes requests for configuration data 122.

In step 208, configuration data 122 is stored on non-volatile storage 112. Configuration data 122 may be stored on non-volatile storage 112 in a variety of formats, depending upon the requirements of a particular application, and the invention is not limited to any particular format. For example, configuration data 122 may be stored on non-volatile storage 112 in an operating system file, such as a Windows registry file or a Windows resource file, or any other type of data file. Configuration data 122 may be stored in a protected area on non-volatile storage 112 so that configuration data 122.

### IV. USING DOWNLOADED CONFIGURATION DATA TO CUSTOMIZE A PRINTER DRIVER

Once printer driver 118 has downloaded configuration data 122 from printing device 104 to client 102, the configuration data 122 may be used to customize printer driver 118. This customization may take many forms. FIG. 3 is a block diagram that depicts example configuration data 122 according to one embodiment of the invention. In this embodiment, configuration data 122 includes a version identification (ID) 300, installed options data 302, media type data 304, command data 306, program logic data 308 and bitmap data 310. These elements are not necessarily required in configuration data 122, and implementations may use fewer or more elements, depending upon the requirements of a particular implementation.

Version ID 300 is data that indicates a version of configuration data 122. Version ID 300 may be used to determine whether the configuration data stored on non-volatile storage 112 is different than the configuration data 122 maintained on printing device 104. This is particularly useful in situations where the configuration data 122 on printing device 104 is updated over time.

Installed options data 302 is data that indicates the installed options on printing device 104. Examples of installed options include, without limitation, types and location of source and destination trays, printing capabilities such as color printing and watermarking, and available finishing options such as stapling, folding, hole punching, binding, gluing, etc. Installed options data 302 may also specify names or identifiers for each installed option, for example, names of source and destination trays. Media type data 304 is data that indicates media types supported by printing device 104. This may include, for example, the type of paper such as normal, recycled, color, photographic, letterhead or preprinted and the size of paper, for example, 8 ½ by 11, A4, etc.

Command data 306 is data that indicates commands supported by printing device 104. Printer driver 118 uses command data 306 to translate commands receive from (and supported by) application program 116 into commands supported by printing device 104. For example, suppose that application program 116 generates print data that includes a command A supported by application program 116. Suppose further that printer driver 118 is configured to translate command A to command A1. Printing device supports command A2, but not command A1. Without configuration data 122 (and command data 306), printer driver 118 would generate and send print data to printing device 104 that contains command A1. Since printing device 104 does not support command A1, the print data would cause an error at printing device 104. Printer driver 118, however, uses command data 306 to generate print data that contains command A2 instead of A1. Command data 306 may also indicate the format of commands supported by printing device 104. For example, command data 306 may specify a particular printing device language (PDL) supported by printing device 104.

Program logic data 308 is used by printer driver 118 and application program 116 to perform decision-making. For example, program logic data 308 may specify actions to be taken by printer driver 118 in response to error conditions received from printing device 104. As another example, program logic data 308 may specify relationships and dependencies between options specified by installed options data 302 and media types specified by media type data 304. Application program 116 may use these relationships and dependencies to handle user interaction through graphical user interface 108. For example, suppose that application program 116 displays, on graphical user interface 108, a set of graphical user interface objects associated with available media types, as indicated by media type data 304. Program logic data 308 may specify that, in response to selection of a particular media type, a user must select from among a set of mandatory attributes and may select from a set of optional attributes. In this situation, application program 116 causes the correct graphical user interface objects to be displayed on graphical user interface 108 in accordance with program logic data 308.

Bitmap data 310 is used by application program 116 to provide a visual depiction of printing device 104 on graphical user interface 108. When displayed on graphical user interface 108, bitmap data 310 may visually indicate installed options and media types supported by printing device 104. For example, when a user selects the name of printing device 104 from a pull-down menu, the bitmap data 310 is displayed on graphical user interface 108 to visually depict printing device 104 with the installed source and destination paper trays and the paper type in each paper tray. This may include names or identifications associated with the source and destination paper trays. According to one embodiment of the invention, when a user selects the name of printing device 104 from a pull-down menu, instead of the bitmap data 310 being displayed, a link to printing device 104 is displayed on graphical user interface 108. The link specifies a uniform resource locator (URL) associated with the bitmap data stored in configuration data 122 on printing device 104. When the user selects the link, bitmap data 310 is retrieved from printing device 104 and displayed on the graphical user interface 308.

Note that the installed options indicated by installed options data 302, the media types indicated by media type data 304, the commands indicated by command data 306, the program logic data 308 and bitmap data 310 may supplement or supercede the corresponding default installed options, media types, commands, program logic and bitmap data included with printer driver 118, if any, when printer driver 118 was installed on client 102 or last updated.

### V. UPDATING CONFIGURATION DATA

There may be situations where configuration data 122 on printing device 104 is changed, for example, to reflect the removal or addition of an option, such as a paper tray or a finishing option. Therefore, according to one embodiment of the invention, configuration data 122 may be subsequently downloaded to client 102 any number of times. The criteria used to determine when configuration data 122 is downloaded to client 102 may vary depending upon the requirements of a particular application and the invention is not limited to any particular criteria. For example, printer driver 118 may request configuration data 122 from printing device 104 if a condition is detected that indicates that printer driver 118 is not compatible with printing device 104. This may occur, for example, if printing device 104 is upgraded, making it incompatible with printer driver 118. Alternatively, printer driver 118 may periodically request configuration data 122 from printing device 104.

According to one embodiment of the invention, version ID 300 is used to determine whether the configuration data 122 needs to be again downloaded. For example, printer driver 118 may first request just the version ID of the configuration data 122 stored on printing device 104. Printer driver 118 compares the version ID of the configuration data 122 stored on printing device 104 with the version indicated by version ID 300 stored in configuration data 122 on client 102. If the comparison indicates that the version of configuration data 122 stored on client 102 is older than the version of configuration data 122 stored on printing device 104, then printer driver 118 requests the configuration data 122 stored on printing device 104. If the comparison indicates that the version of configuration data 122 stored on client 102 is as new as or newer than the version of configuration data 122 stored on printing device 104, then the configuration data 122 on printing device 104 does not need to be downloaded to client 102.

### VI. MULTIPLE PRINTING DEVICE APPLICATIONS

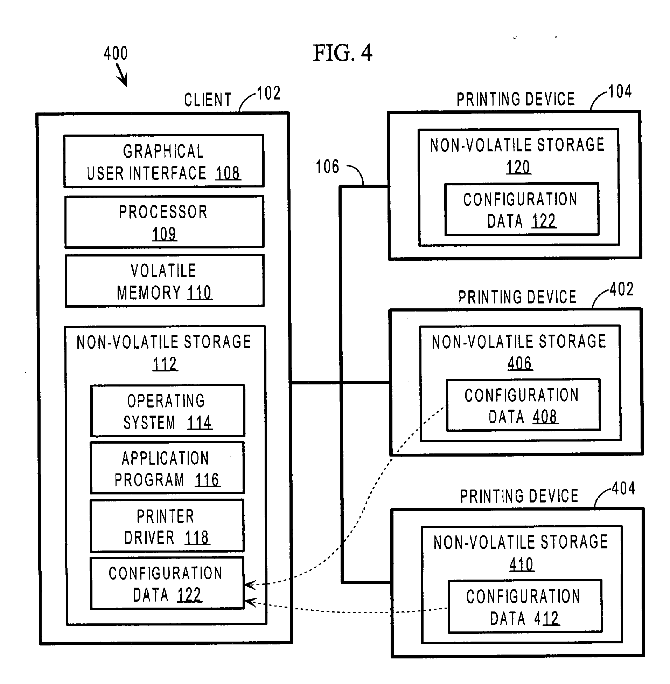

The approach described herein for automatically configuring a printer driver is applicable to configuring a printer driver to support any number of printing devices. FIG. 4 is a block diagram that depicts an arrangement 400 for configuring a printer driver to support multiple printing devices. In arrangement 400, client 102 is communicatively coupled to printing device 104, as in FIG. 1, as well as two additional printing devices 402 and 404, that represent new printing devices made available to client 102. Printing device 402 includes a non-volatile storage 406 with configuration data 408. Printing device 404 includes a non-volatile storage 410 with configuration data 412.

In this example, it is presumed that printer driver 118 does not currently have the functionality necessary to allow application program 116 to print to printing devices 402 and 404. Therefore, according to one embodiment of the invention, printer driver 118 retrieves configuration data 408 and 412 from printing devices 402 and 404. Printer driver 118 may send requests directly to printing devices 402 and 404, for example, by including an address for printing devices 402 and 404 in each request. Alternatively, printer driver 118 may send both requests to both printing devices 402 and 404 and include an identifier in each request that can be examined by printing devices 402 and 404. Other approaches may also be used, depending upon the requirements of a particular application.

The configuration data 408 and 412 received by client 102 is stored on non-volatile storage 112. Configuration data 408 and 412 may be stored with or separate from configuration data 122 on non-volatile storage 112, depending upon the requirements of a particular application. For example, configuration data 122, 408 and 410 may be stored in a single Windows resource file or data file, or in separate files. Whether configuration data 122, 408 and 410 is stored together or separately, printer driver 118 keeps track of the location and association of configuration data 122, 408 and 410 to printing devices 104, 402 and 404, respectively, so that the correct configuration data can be used.

### VII. IMPLEMENTATION MECHANISMS

Although the functionality of printer driver 118 has been primarily described herein in the context of a software process, the functionality may be implemented in hardware, software, or any combination of hardware and software, and the invention is not limited to any particular implementation.

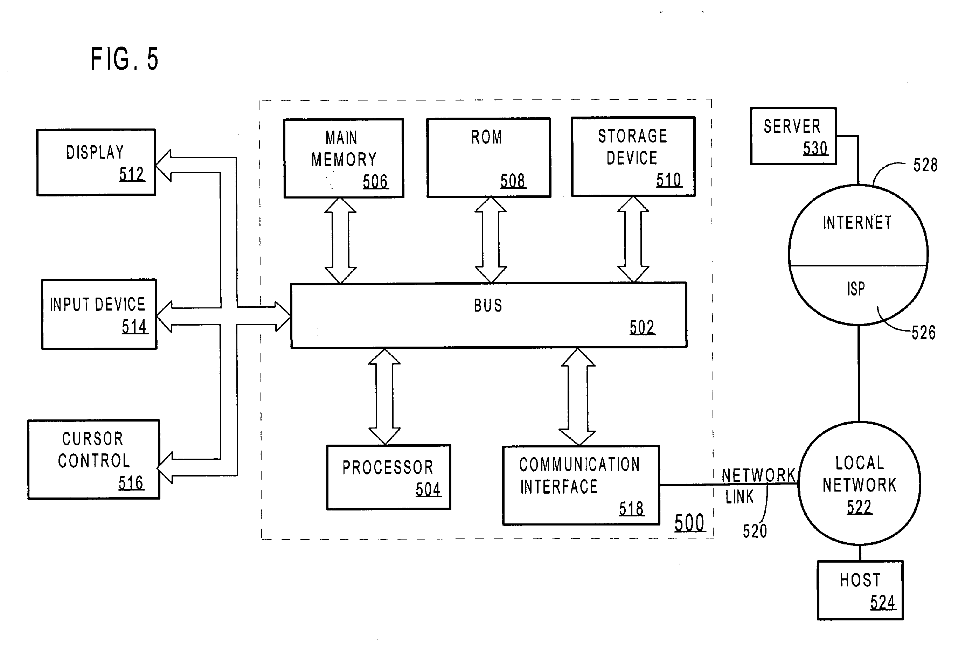

FIG. 5 is a block diagram that illustrates a computer system 500 upon which an embodiment of the invention may be implemented. Computer system 500 includes a bus 502 or other communication mechanism for communicating information, and a processor 504 coupled with bus 502 for processing information. Computer system 500 also includes a main memory 506, such as a random access memory (RAM) or other dynamic storage device, coupled to bus 502 for storing information and instructions to be executed by processor 504. Main memory 506 also may be used for storing temporary variables or other intermediate information during execution of instructions to be executed by processor 504. Computer system 500 further includes a read only memory (ROM) 508 or other static storage device coupled to bus 502 for storing static information and instructions for processor 504. A storage device 510, such as a magnetic disk or optical disk, is provided and coupled to bus 502 for storing information and instructions.

Computer system 500 may be coupled via bus 502 to a display 512, such as a cathode ray tube (CRT), for displaying information to a computer user. An input device 514, including alphanumeric and other keys, is coupled to bus 502 for communicating information and command selections to processor 504. Another type of user input device is cursor control 516, such as a mouse, a trackball, or cursor direction keys for communicating direction information and command selections to processor 504 and for controlling cursor movement on display 512. This input device typically has two degrees of freedom in two axes, a first axis (e.g., x) and a second axis (e.g., y), that allows the device to specify positions in a plane.

The invention is related to the use of computer system 500 for implementing the techniques described herein. According to one embodiment of the invention, those techniques are performed by computer system 500 in response to processor 504 executing one or more sequences of one or more instructions contained in main memory 506. Such instructions may be read into main memory 506 from another machine-readable medium, such as storage device 510. Execution of the sequences of instructions contained in main memory 506 causes processor 504 to perform the process steps described herein. In alternative embodiments, hard-wired circuitry may be used in place of or in combination with software instructions to implement the invention. Thus, embodiments of the invention are not limited to any specific combination of hardware circuitry and software.

The term "machine-readable medium" as used herein refers to any medium that participates in providing data that causes a machine to operation in a specific fashion. In an embodiment implemented using computer system 500, various machine-readable media are involved, for example, in providing instructions to processor 504 for execution. Such a medium may take many forms, including but not limited to, non-volatile media, volatile media, and transmission media. Non-volatile media includes, for example, optical or magnetic disks, such as storage device 510. Volatile media includes dynamic memory, such as main memory 506. Transmission media includes coaxial cables, copper wire and fiber optics, including the wires that comprise bus 502. Transmission media can also take the form of acoustic or light waves, such as those generated during radio-wave and infrared data communications.

Common forms of machine-readable media include, for example, a floppy disk, a flexible disk, hard disk, magnetic tape, or any other magnetic medium, a CD-ROM, any other optical medium, punchcards, papertape, any other physical medium with patterns of holes, a RAM, a PROM, and EPROM, a FLASH-EPROM, any other memory chip or cartridge, a carrier wave as described hereinafter, or any other medium from which a computer can read.

Various forms of machine-readable media may be involved in carrying one or more sequences of one or more instructions to processor 504 for execution. For example, the instructions may initially be carried on a magnetic disk of a remote computer. The remote computer can load the instructions into its dynamic memory and send the instructions over a telephone line using a modem. A modem local to computer system 500 can receive the data on the telephone line and use an infrared transmitter to convert the data to an infrared signal. An infrared detector can receive the data carried in the infrared signal and appropriate circuitry can place the data on bus 502. Bus 502 carries the data to main memory 506, from which processor 504 retrieves and executes the instructions. The instructions received by main memory 506 may optionally be stored on storage device 510 either before or after execution by processor 504.

Computer system 500 also includes a communication interface 518 coupled to bus 502. Communication interface 518 provides a two-way data communication coupling to a network link 520 that is connected to a local network 522. For example, communication interface 518 may be an integrated services digital network (ISDN) card or a modem to provide a data communication connection to a corresponding type of telephone line. As another example, communication interface 518 may be a local area network (LAN) card to provide a data communication connection to a compatible LAN. Wireless links may also be implemented. In any such implementation, communication interface 518 sends and receives electrical, electromagnetic or optical signals that carry digital data streams representing various types of information.

Network link 520 typically provides data communication through one or more networks to other data devices. For example, network link 520 may provide a connection through local network 522 to a host computer 524 or to data equipment operated by an Internet Service Provider (ISP) 526. ISP 526 in turn provides data communication services through the world wide packet data communication network now commonly referred to as the "Internet" 528. Local network 522 and Internet 528 both use electrical, electromagnetic or optical signals that carry digital data streams. The signals through the various networks and the signals on network link 520 and through communication interface 518, which carry the digital data to and from computer system 500, are exemplary forms of carrier waves transporting the information.

Computer system 500 can send messages and receive data, including program code, through the network(s), network link 520 and communication interface 518. In the Internet example, a server 530 might transmit a requested code for an application program through Internet 528, ISP 526, local network 522 and communication interface 518. The received code may be executed by processor 504 as it is received, and/or stored in storage device 510, or other non-volatile storage for later execution. In this manner, computer system 500 may obtain application code in the form of a carrier wave.

In the foregoing specification, embodiments of the invention have been described with reference to numerous specific details that may vary from implementation to implementation. Thus, the sole and exclusive indicator of what is, and is intended by the applicants to be, the invention is the set of claims that issue from this application, in the specific form in which such claims issue, including any subsequent correction. Hence, no limitation, element, property, feature, advantage or attribute that is not expressly recited in a claim should limit the scope of such claim in any way. The specification and drawings are, accordingly, to be regarded in an illustrative rather than a restrictive sense.

## Claims

1. An apparatus comprising:
a non-volatile storage device;
an application program; and
a printer driver configured to
retrieve configuration data from a printing device, and
cause the configuration data to be stored on the non-volatile storage device.

2. The apparatus recited in Claim 1, wherein the application program is configured to use the configuration data to facilitate printing of an electronic document.

3. The apparatus recited in Claim 1, wherein the application program is configured to use the configuration data to generate one or more graphical user interface objects that are displayed on a graphical user interface in association with the printing of an electronic document.

4. The apparatus recited in Claim 1, wherein:
configuration data includes bitmap data for the printing device, and
the application program is configured to cause the bitmap data to be displayed on a graphical user interface in association with the printing of an electronic document.

5. The apparatus recited in Claim 1, wherein the printer driver is further configured to cause a graphical user interface object to be displayed on a graphical user interface, wherein the graphical user interface object includes a link with a URL associated with bitmap data included in the configuration data stored on the printing device.

6. The apparatus recited in Claim 5, wherein the printer driver is further configured to in response to detecting a user selection of the link, retrieve the bitmap data from the printing device and cause the bitmap data to be displayed on the graphical user interface.

7. The apparatus recited in Claim 1, wherein the configuration data indicates one or more options installed on the printing device.

8. The apparatus recited in Claim 1, wherein the configuration data indicates one or more source trays available on the printing device.

9. The apparatus recited in Claim 1, wherein the configuration data indicates one or more media types available on the printing device.

10. The apparatus recited in Claim 1, wherein the configuration data indicates one or more commands supported by the printing device.

11. The apparatus recited in Claim 1, wherein the configuration data includes program logic used by the printer driver.

12. The apparatus recited in Claim 1, wherein:
the configuration data includes first version identification data that indicates a version of the configuration data retrieved by the printer driver, and
the printer driver is further configured to:
retrieve second version identification data from the printing device, wherein the second version identification data indicates a version of the configuration data maintained on the printing device,
compare the first version identification data to the second version identification data, and
if the comparison of the first version identification data to the second version identification data indicates that the version of configuration data maintained on the printing device is more recent than the version of configuration data retrieved by the printer driver, then the printer driver retrieving the more recent version of the configuration data from the printing device.

13. The apparatus recited in Claim 1, wherein the printer driver is configured to retrieve the configuration data from the printing device in response to an indication that the printer driver is no fully compatible with the printing device.

14. The apparatus recited in Claim 1, wherein the printer driver is further configured to:
retrieve second configuration data from a second printing device, and
cause the second configuration data to be stored on the non-volatile storage device.
